# EUROPEAN PATENT SPECIFICATION

(11) **EP 3 471 100 B1**
(45) Date of publication and mention of the grant of the patent: **19.05.2021**
(21) Application number: 16760113.7
(22) Date of filing: 14.06.2016
(51) Int. Cl.: G11B 27/10, G11B 27/28, H04N 21/41, H04N 21/43, H04N 21/44, H04N 21/462, H04N 21/4722, H04N 21/81, G06F 16/783, H04N 21/237, H04N 21/242, H04N 21/6377, H04N 21/643

(54) **METHOD AND SYSTEM FOR SYNCHRONISING BETWEEN AN ITEM OF REFERENCE AUDIOVISUAL CONTENT AND AN ALTERED TELEVISION BROADCAST VERSION THEREOF**
VERFAHREN UND SYSTEM ZUR SYNCHRONISATION ZWISCHEN EINEM AUDIOVISUELLEN REFERENZINHALT UND EINER VERÄNDERTEN, ÜBER FERNSEHRUNDFUNK GESENDETEN VERSION HIERVON
PROCÉDÉ ET SYSTÈME DE SYNCHRONISATION ENTRE UN CONTENU AUDIOVISUEL DE RÉFÉRENCE ET UNE VERSION MODIFIÉE DE CE DERNIER ÉMISE PAR LA TÉLÉVISION

(43) Date of publication of application: 17.04.2019
(73) Proprietor: Tagsonomy, S.L., 33192 Llanera (Asturias) (ES)
(72) Inventor: RODRÍGUEZ SOLÍS, Luis Ignacio, 28014 Madrid (ES); PÉREZ GALLEGO, Pablo, 28014 Madrid (ES); MENÉNDEZ CORRAL, Guillermo, 28014 Madrid (ES); FIERRO IGLESIAS, David, 28014 Madrid (ES)
(74) Representative: Monzón de la Flor, Luis Miguel
(86) International application number: PCT/ES2016/070448
(87) International publication number: WO 2017/216394

(56) References cited:
- US-A1- 2006 187 358
- US-A1- 2011 311 095
- US-A1- 2012 095 958
- US-A1- 2012 324 495
- US-A1- 2013 308 818
- US-A1- 2015 110 340
- R. LIENHART ET AL: "On the detection and recognition of television commercials", PROCEEDINGS OF IEEE INTERNATIONAL CONFERENCE ON MULTIMEDIA COMPUTING AND SYSTEMS, 1 January 1997 (1997-01-01), pages 509-516, XP055142941, DOI: 10.1109/MMCS.1997.609763 ISBN: 978-0-81-867819-6

## Description

### OBJECT OF THE INVENTION

In the first place, the object of the present invention, as specified in the title, is a method for synchronising a reference audio-visual content with an altered version thereof broadcast through television and, in the second place, a system for performing said synchronisation process.

The synchronisation between the content broadcast through television and the reference content makes it possible to show and obtain metadata or additional data to the images shown through television. I.e. the purpose is to have additional information about the images broadcast through television, from any viewing platform (tablet or smartphone, Smart TV, online video player, etc.) in real time and synchronised with the broadcast of the film or documentary.

The present invention is characterised in that it uses different algorithms, some of them adaptive or smart, in addition to some digital techniques, in a joint, synergistic manner, in order to obtain a high-security synchronisation.

Therefore, the present invention is framed within the field of digital techniques, in particular those related to the broadcasting of programmes.

### BACKGROUND OF THE INVENTION

In order to understand the proposed synchronisation method, it is necessary to know that the films that we view are a succession of a series of images per second, which is what creates the optical continuity effect.

The number of images per second, also known as refresh rate, or fps (frames per second), is the rate at which a device shows images called frames or photograms. The term is equally applied to films and video cameras, computer graphics and motion capture systems. The refresh rate is expressed in frames per second, or the acronym FPS.

The first silent films were shot with cameras that recorded only 15 images per second; as a result, when they were screened, generally at a higher speed, the characters' actions seemed to be much more accelerated. The frame rate progressively increased with time, to up to 22 frames per second, although in fact the final speed of the film could be varied even by the projectionist in the projection booth itself.

The addition of sound to films entailed the requirement to shoot images at a fixed rate of 24 frames per second in order to achieve uniformity of sound. The human ear is more sensitive than the eye, and increasing or reducing the speed of sound would not have gone unnoticed by spectators. The 24 frames per second rate has survived in time, such that even today it is used as a standard in cinematographic shootings and screenings, which gives films their particular cinematographic visual appearance.

Oftentimes, when viewing a film or a recorded broadcast, we would like to have additional information about what we are viewing; for example, data related to the objects or places shown (schedules, sales prices of different products, location, historical data, geographical data, how to get there, etc.); however, it is not needed immediately. It is also interesting to obtain data (opinions, wishes, messages, etc.) related to a specific aspect of the content.

In the state of the art is known the document US2015110340 which discloses a systems and methods of identifying unknown video content are described. An example method may include receiving a first fingerprint and a second fingerprint. The first fingerprint may be a color-based fingerprint derived from colors in a portion of the unknown video content, and the second fingerprint may be at least partially based on a feature other than the colors of the unknown video content. A reference database of reference fingerprints may then be queried using one of the first fingerprint or the second fingerprint to obtain a candidate group of fingerprints. The candidate group of fingerprints may then be queried using the other of the first fingerprint and the second fingerprint to identify at least one query fingerprint. The unknown video content may then be identified using the at least one query fingerprint. For example, the second fingerprint may be a luminance-based fingerprint derived from luminance in the unknown video content.

Consequently, with the method proposed herein, we intend to provide additional information related to the content of a broadcast; to this end, it is necessary to design a process for synchronising a reference audio-visual content and an altered version thereof broadcast through television, where to a number of information fields have been added, by developing a method and an architecture or system such as the one described below, the essentiality whereof is specified in the first claim.

### DESCRIPTION OF THE INVENTION

The object of the present invention is a method for synchronising a reference audio-visual content and an altered version thereof broadcast through television.

Reference audio-visual content is understood to mean the basic recorded and stored content that is to be synchronised, whereas, in general, the broadcast audio-visual content is an altered version of the reference content, due to the transformations that the reference image may have undergone (remasterings that alter the colour or the edges, including cuts of a part of the reference image (cropping), the existence of different versions of the same reference content which have had segments thereof added or deleted, and the possible difference in broadcasting speed between the reference content and the content broadcast through television.

In general, the necessary stages or steps to obtain said synchronisation are:
- Creation, prior to the broadcast, of a trace of the reference content, where the necessary transformations of the reference content are performed.
- Creation, in real time, of a trace of the broadcast content, where the necessary transformations of the broadcast content are performed.
- Comparison between the trace created from the broadcast content and the trace created from the reference content until a certain degree of coincidence or certainty is achieved, within a threshold that may be fixed or adaptive.

The synchronisation algorithm takes different aspects into consideration; on the one hand, it is in charge of extracting the characteristics of the image corresponding to a series of frames; to this end, during the process of creating the traces of both the reference content and the broadcast content, the following actions are performed:
- Partitioning of the image, i.e. the screen corresponding to a frame of the broadcast by dividing the image into smaller pieces or partitions.
- Extraction of the Colour histogram corresponding to each of the partitioned pieces, to obtain four partitioned colour histograms, one for red, another for blue, another for green, and, finally, one for grey.
- Searching for significant points by searching shapes or the boundary points of the image of the frame whose characteristics are to be obtained, i.e. we are no longer searching for a colour analysis or histogram, but for the border shapes or points, or those that make the greatest difference.

Comparison between the characteristics of the image in each of the frames analysed and a frame of the reference content, in order to determine whether or not the image broadcast at a given time corresponds to the saved broadcast image; in this case, should there be metadata associated with the corresponding image, they would be shown on the users' screen.

The process should be able to determine whether or not the comparison between the two frames, that of the broadcast image and that of the reference, matches. Said match need not be full, since it is dependent upon various factors, such as the quality of the broadcast, the quality of the recorded broadcast or the quality of the film itself, the noise added to the image by the broadcaster, in the form of logos or messages, the transformations that the reference image may have undergone (remasterings that alter the colour or the edges, including cuts of a part of the reference image (cropping), the existence of different versions of the same reference content which have had segments thereof added or deleted, and the possible difference in broadcasting speed between the reference content and the content broadcast through television; therefore, a match is considered to exist when there is a given degree of certainty or the differences are within a threshold that, moreover, may be adaptive or smart, i.e. one which learns from the levels of certainty that may be achieved during the comparison or what may be considered to be a good or bad synchronisation of a broadcast frame with a given reference frame, where the degree of certainty required throughout the broadcast may be modified by changing the required threshold.

During this process of comparing frames, a browser window is used which is located around the time of the broadcast, preferably forwards, i.e. towards a subsequent time. The purpose is to extract the characteristics of the image from the frames corresponding to a given window dimension, in order not to have to recover the characteristics of the image from all the frames in the broadcast, but only those closest to the time of the broadcast.

The browser window may be adaptive, i.e. it need not have a fixed length, such that, as the degree of correspondence achieved in the comparison between the frames increases, the browser window may be reduced, whereas, if the degree of correspondence between the frames decreases, the length of the browser window increases. Thus, in the event that the degree of correspondence progressively decreases, the number of seconds browsed in the browser window doubles each time that the degree of correspondence decreases, to a pre-set maximum, and once the latter has been reached, the window moves forward until it finds once again a correspondence between the broadcast content and the reference content.

Another aspect to be considered in the synchronisation process is the extraction of the horizontal black bars, which in some broadcasts appear above and beneath the broadcast image in order to adjust different formats. The real-time method must be able to detect them and cut them, in order to determine what piece of the image must be cut and extract the characteristics of the image only from those parts that have comparable content.

In order to fulfil said purpose, the method takes advantage of three characteristics specific to these black bars: they are continuously static bands, for which reason they undergo no changes or motion; they are symmetric or almost symmetric bands located on the upper and lower ends of the content; and they are totally black; in this way, the width of the horizontal black bars may be detected.

Another key aspect is the automatic detection of the advertisement breaks (or pauses for other reasons) during the broadcasting of the content through television. To achieve such detection, the process is based on three elements:
- The identification of the logo of the broadcasting channel, which is usually located at some of the corners of the broadcast, and is generally static. The algorithm detects its position and shape. The identification of the logo is very useful to detect the advertisement broadcasting period, since during the broadcasting of advertisements the logo disappears, and reappears when the broadcast resumes.
- The identification of the black frames, which are usually three or four consecutive, completely black frames, which allow commercial channels to separate the broadcasting of a film or a programme from the advertisements.
- The analysis of the degree of correspondence during the comparison between the frames, such that, when said degree of correspondence disruptively skyrockets, it is a clear indicator of the beginning of advertisements.

Detecting the moment when the broadcast resumes is simpler, since, in the comparison, the broadcast frames begin to look like the saved frames.

The system is very robust and reliable, and achieves synchronisation even in those situations wherein the broadcast content and the reference content are widely different. Specifically, in the case of:
- Different broadcasting speeds, in frames per second, of the reference content and the broadcast content, adjusted to different international standards (PAL, NTSC, etc.).
- Superimposed noise introduced by the broadcaster (logos, messages, etc.).
- Modified versions with respect to the reference content (modified colour spectrum, softening of contours, partial cuts of the image, superimposed texts in different languages, etc.).
- Extended or short versions of the reference content, due to the fact that some scenes have been added or deleted, they may contain alternative endings, etc.

Except as otherwise specified, all the technical and scientific elements used in the present specification have the meaning that is habitually understood by normal persons skilled in the art where to this invention belongs. In the implementation of the present invention, similar or equivalent processes and materials to those described in the specification may be used.

Throughout the description and the claims, the word "comprises" and variants thereof are not intended to exclude other technical characteristics, additives, components or steps. For persons skilled in the art, other objects, advantages and characteristics of the invention will arise, partly from the description and partly from the implementation of the invention.

### DESCRIPTION OF THE FIGURES

In order to supplement the description being made, and to contribute to a better understanding of the characteristics of the invention, according to a preferred embodiment thereof, a set of drawings is attached to said description as an integral part thereof, where the following is represented for illustrative, non-limiting purposes:

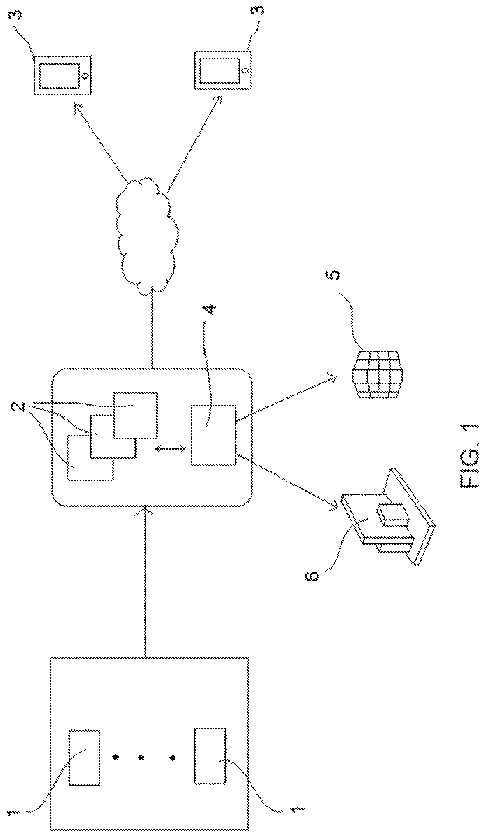

In Figure 1, we may observe a representation of the architecture of the system designed to implement the method and the distribution of additional data in the synchronised broadcasts.

### PREFERRED EMBODIMENT OF THE INVENTION

In light of the figures, below we describe a preferred embodiment of the proposed invention.

In Figure 1, we may observe that the architecture of the system that allows for the synchronisation and distribution of additional information or data or metadata related to a live broadcast of a film, series or documentary towards a number of terminals, comprises:
- A series of television receivers (1), designed to synchronise the reference content with the Television broadcast, by notifying of the current indicator and status of each of the channels synchronised by means of HTTP requests, and distribute them to all the synchronisation servers.
- A series of synchronisation servers (2) connected to the groups of television tuners (1), which concentrate the different synchronisation signals received from them and redistribute the relevant updates towards the devices (3) connected thereto. Several synchronisation servers may be run in the same machine, listening to connections from different devices or ports. The number of devices (3) supported is scalable, by launching new instances.
- A series of synchronisation monitors (4) that control the execution of the synchronisation servers (2), by periodically storing the status thereof in a table (5) and updating it in the cloud (6).

Having sufficiently described the nature of the present invention, as well as the way to implement it, we state that, within its essentiality, it may be implemented in other embodiments that may differ in some details from the one described as an example, and which will equally receive the protection being requested, provided that they do not alter, change or modify the fundamental principle thereof as defined in the appended claims.

## Claims

1. Method for synchronising a reference audio-visual content with an altered version thereof broadcast through television, comprising the following steps:
• Creation, prior to the broadcast, of a trace of the reference content, where the necessary transformations of the reference content are performed,
• Creation, in real time, of a trace of the broadcast content by extracting the characteristics of the image corresponding to a series of frames;
Where, in the process of creating the traces of both the reference content and the broadcast content, the following actions are performed:
• Partitioning of the image corresponding to a frame of the broadcast by dividing the image into smaller pieces or partitions,
• Extraction of the Colour histogram corresponding to each of the partitioned pieces,
• Searching for significant points by searching shapes or the boundary points of the image in each of the frames analysed;
The method continues with the following steps:
• Detection of an advertisement broadcasting period during the broadcasting of the content,
• Comparison between the traces created from the broadcast content and the reference content until a certain degree of correspondence is achieved, within a given threshold,
• Where the number of frames wherefrom a trace of the broadcast content is created matches a browser window located around the time of broadcasting,
• the browser window is adaptive, in such a way that the greater the degree of correspondence achieved when comparing the frames, the browser window may be reduced, while if the degree of correspondence between the frames decreases, the length of the browser window increases,
in the event that the degree of correspondence should progressively decrease, the number of seconds browsed in the browser window doubles each time that the degree of correspondence decreases, up to a configurable maximum and, once this maximum has been reached, the window commences a search in a forward direction until synchronisation is achieved.

2. Method for synchronising a reference audio-visual content with an altered version thereof broadcast through television, according to claim 1, wherein the number of frames analysed for the creation of the reference trace is one for every second of the reference content.

3. Method for synchronising a reference audio-visual content with an altered version thereof broadcast through television, according to any of the preceding claims, wherein the colour histograms obtained for each partitioned piece of each frame of the broadcast are histograms, one for the colour red, another for blue, another for green and, finally, one for grey.

4. Method for synchronising a reference audio-visual content with an altered version thereof broadcast through television, according to any of the preceding claims, wherein the detection of the advertisement broadcasting periods is based on one or a combination of some of the methods described:
• The identification of the logo of the broadcasting channel, by determining during the broadcasting of advertisements that the logo disappears, and reappears when the broadcast resumes,
• Identification of black frames, by determining three or four consecutive, completely black frames that allow commercial channels to separate the broadcasting of a film or a programme from the advertisements,
• Analysis of the degree of correspondence during the comparison between the frames, by determining that when said degree of correspondence disruptively skyrockets, the beginning of advertisements.

5. Method for synchronising a reference audio-visual content with an altered version thereof broadcast through television, according to any of the preceding claims, wherein the threshold within which a correspondence between the broadcast frame and the reference frame is considered to exist is adaptive or smart, which learns from the levels of certainty that may be achieved during the comparison or what may be considered to be a good or bad synchronisation of a broadcast frame with a given reference frame, where the degree of certainty required throughout the broadcast may be modified by changing the required threshold.

6. System configured to perform the synchronisation, according to the method according to any of claims 1 to 5, and further configured to perform the distribution of additional information or data or metadata related to a live broadcast towards a series of devices (3), wherein it comprises:
• A series of television tuners (1), designed to synchronise the television broadcast content from broadcast channels with the recorded or stored reference content, by notifying of the current indicator and status of each of the channels synchronised by means of HTTP requests, and distribute them to all the synchronisation servers,
• A series of synchronisation servers (2) connected to the groups of television tuners (1), which concentrate the different synchronisation signals received from them and redistribute the relevant updates towards the devices (3) connected to each channel, maintaining these synchronised in real time,
• A series of synchronisation monitors (4) that control the execution of the synchronisation servers (2), by periodically storing the status thereof in a table (5) and updating it in the cloud (6).

## Patentansprüche

1. Verfahren zur Synchronisation zwischen einem audiovisuellen Referenzinhalt und einer veränderten, über Fernsehrundfunk gesendeten Version hiervon, umfassend die folgenden Schritte:
• Erstellen, vor der Sendung, einer Spur des Referenzinhalts, bei der die notwendigen Transformationen des Referenzinhalts durchgeführt werden,
• Erstellen, in Echtzeit, einer Spur des Sendeinhalts durch Extrahieren der Merkmale des Bildes, das einer Reihe von Frames entspricht;
Wobei bei der Erstellung der Spuren sowohl des Referenzinhalts als auch des Sendeinhalts die folgenden Vorgänge durchgeführt werden:
• Partitionieren des Bildes, das einem Frame der Sendung entspricht, durch Aufteilen des Bildes in kleinere Teile oder Partitionen,
• Extrahieren des Farbhistogramms, das jedem der partitionierten Teile entspricht,
• Suchen nach signifikanten Punkten durch Durchsuchen von Formen oder den Randpunkten des Bildes in jedem der analysierten Frames;
Das Verfahren wird mit den folgenden Schritten fortgesetzt:
• Erkennen eines Werbesendungsszeitraums während der Sendung des Inhalts,
• Vergleichen der aus dem Sendeinhalt erstellten Spuren mit dem Referenzinhalt, bis ein bestimmter Grad der Übereinstimmung innerhalb eines vorgegebenen Schwellenwerts erreicht ist,
• Wobei die Anzahl der Frames, aus denen eine Spur des Sendeinhalts erstellt wird, mit einem Browserfenster übereinstimmt, das sich zum Zeitpunkt der Sendung befindet,
• das Browser-Fenster ist adaptiv, so dass, je größer der erreichte Grad der Übereinstimmung beim Vergleich der Frames ist, das Browser-Fenster verkleinert werden kann, während, wenn der Grad der Übereinstimmung zwischen den Frames abnimmt, die Länge des Browser-Fensters zunimmt,
in dem Fall, dass der Grad der Übereinstimmung fortschreitend abnimmt, verdoppelt sich die Anzahl der im Browserfenster durchlaufenen Sekunden jedes Mal, wenn der Grad der Übereinstimmung abnimmt, bis zu einem konfigurierbaren Maximum, und sobald dieses Maximum erreicht ist, beginnt das Fenster eine Suche in Vorwärtsrichtung, bis eine Synchronisation erreicht ist.

2. Verfahren zur Synchronisation zwischen einem audiovisuellen Referenzinhalt und einer veränderten, über Fernsehrundfunk gesendeten Version hiervon, gemäß Anspruch 1, wobei die Anzahl der Frames, die zur Erstellung der Referenzspur analysiert werden, eines für jede Sekunde des Referenzinhalts ist.

3. Verfahren zur Synchronisation zwischen einem audiovisuellen Referenzinhalt und einer veränderten, über Fernsehrundfunk gesendeten Version hiervon, nach einem der vorhergehenden Ansprüche, wobei die für jeden aufgeteilten Teil jedes Frames der Sendung erhaltenen Farbhistogramme Histogramme sind, eines für die Farbe Rot, eines für Blau, eines für Grün und schließlich eines für Grau.

4. Verfahren zur Synchronisation zwischen einem audiovisuellen Referenzinhalt und einer veränderten, über Fernsehrundfunk gesendeten Version hiervon, nach einem der vorhergehenden Ansprüche, wobei die Erkennung der Werbesendungszeiträume auf einer oder einer Kombination einiger der beschriebenen Methoden basiert:
• Die Identifizierung des Logos des Sendekanals, indem während der Sendung von Werbung festgestellt wird, dass das Logo verschwindet und bei der Wiederaufnahme der Sendung wieder erscheint,
• Identifizierung von schwarzen Frames, durch Bestimmen von drei oder vier aufeinanderfolgenden, komplett schwarzen Frames, die es kommerziellen Sendern ermöglichen, die Sendung eines Films oder eines Programms von der Werbung zu trennen,
• Analyse des Grades der Übereinstimmung während des Vergleichs zwischen den Frames, durch Bestimmen, dass, wenn der Grad der Übereinstimmung störend in die Höhe schießt, die Werbung beginnt.

5. Verfahren zur Synchronisation zwischen einem audiovisuellen Referenzinhalt und einer veränderten, über Fernsehrundfunk gesendeten Version hiervon, nach einem der vorhergehenden Ansprüche, wobei der Schwellenwert, innerhalb dessen eine Übereinstimmung zwischen dem gesendeten Rahmen und dem Referenzrahmen als vorhanden angesehen wird, adaptiv oder intelligent ist, der aus den Sicherheitsgraden lernt, die während des Vergleichs erreicht werden können oder was als eine gute oder schlechte Synchronisation eines gesendeten Rahmens mit einem gegebenen Referenzrahmen angesehen werden kann, wobei der Sicherheitsgrad, der während der Sendung erforderlich ist, durch Ändern des erforderlichen Schwellenwerts modifiziert werden kann.

6. System, das konfiguriert ist, um die Synchronisation gemäß dem Verfahren nach einem der Ansprüche 1 bis 5 durchzuführen, und das ferner konfiguriert ist, um die Verteilung von zusätzlichen Informationen oder Daten oder Metadaten, die sich auf eine Live-Übertragung beziehen, in Richtung einer Reihe von Vorrichtungen (3) durchzuführen, wobei es Folgendes umfasst:
• Eine Reihe von Fernsehtunern (1), die dazu bestimmt sind, den Fernsehsendeinhalt von Sendekanälen mit dem aufgezeichneten oder gespeicherten Referenzinhalt zu synchronisieren, indem sie den aktuellen Indikator und Status jedes der synchronisierten Kanäle mittels HTTP-Anforderungen mitteilen und sie an alle Synchronisationsserver verteilen,
• Eine Reihe von Synchronisationsservern (2), die mit den Gruppen von Fernsehtunern (1) verbunden sind, die die verschiedenen von ihnen empfangenen Synchronisationssignale bündeln und die entsprechenden Aktualisierungen an die an jeden Kanal angeschlossenen Vorrichtungen (3) weiterverteilen und diese in Echtzeit synchronisiert halten,
• Eine Reihe von Synchronisationsüberwachern (4), die die Ausführung der Synchronisationsserver (2) steuern, indem sie deren Status periodisch in einer Tabelle (5) speichern und in der Cloud (6) aktualisieren.

## Revendications

1. Procédé de synchronisation d'un contenu audiovisuel de référence avec une version modifiée de celui-ci diffusée à la télévision, comprenant les étapes suivantes :
• Création, préalablement à la diffusion, d'une trace du contenu de référence, où sont effectuées les transformations nécessaires du contenu de référence,
• Création, en temps réel, d'une trace du contenu diffusé par extraction des caractéristiques de l'image correspondant à une série de trames ;
Lorsque, lors du processus de création des traces à la fois du contenu de référence et du contenu diffusé, les actions suivantes sont effectuées :
• Partitionnement de l'image correspondant à une trame de l'émission en divisant l'image en morceaux ou partitions plus petits,
• Extraction de l'histogramme Couleur correspondant à chacune des pièces partitionnées,
• Recherche de points significatifs en recherchant des formes ou des points limites de l'image dans chacun des cadres analysés ;
La méthode se poursuit avec les étapes suivantes :
• Détection d'une période de diffusion publicitaire lors de la diffusion du contenu,
• Comparaison entre les traces créées à partir du contenu diffusé et le contenu de référence jusqu'à ce qu'un certain degré de correspondance soit atteint, à l'intérieur d'un seuil donné,
• Lorsque le nombre d'images à partir desquelles une trace du contenu diffusé est créée correspond à une fenêtre de navigateur située à peu près au moment de la diffusion,
• la fenêtre du navigateur est adaptative, de telle sorte que plus le degré de correspondance atteint lors de la comparaison des cadres, la fenêtre du navigateur peut être réduite, tandis que si le degré de correspondance entre les cadres diminue, la longueur de la fenêtre du navigateur augmente,
en cas de diminution progressive du degré de correspondance, le nombre de secondes parcourues dans la fenêtre du navigateur double à chaque fois que le degré de correspondance diminue, jusqu'à un maximum paramétrable et, une fois ce maximum atteint, la fenêtre lance une recherche vers l'avant jusqu'à ce que la synchronisation soit réalisée.

2. Procédé de synchronisation d'un contenu audiovisuel de référence avec une version modifiée de celui-ci diffusée à la télévision, selon la revendication 1, dans lequel le nombre de trames analysées pour la création de la trace de référence est de une pour chaque seconde du contenu de référence.

3. Procédé pour synchroniser un contenu audiovisuel de référence avec une version modifiée de celui-ci diffusée à travers la télévision, selon l'une quelconque des revendications précédentes, dans lequel les histogrammes de couleur obtenus pour chaque élément partitionné de chaque trame de l'émission sont des histogrammes, un pour la couleur rouge, un autre pour le bleu, un autre pour le vert et enfin un pour le gris.

4. Procédé pour synchroniser un contenu audiovisuel de référence avec une version modifiée de celui-ci diffusée à la télévision, selon l'une quelconque des revendications précédentes, dans lequel la détection des périodes de diffusion publicitaire est basée sur un ou une combinaison de certains des procédés décrits :
• L'identification du logo de la chaîne de diffusion, en déterminant lors de la diffusion des publicités que le logo disparaît, et réapparaît à la reprise de l'émission,
• Identification des trames noires, en déterminant trois ou quatre trames consécutives complètement noires qui permettent aux chaînes commerciales de séparer la diffusion d'un film ou d'un programme des publicités,
• Analyse du degré de correspondance lors de la comparaison entre les trames, en déterminant que lorsque ledit degré de correspondance monte en flèche de manière perturbatrice, le début des publicités.

5. Procédé pour synchroniser un contenu audiovisuel de référence avec une version modifiée de celui-ci diffusée par la télévision, selon l'une quelconque des revendications précédentes, dans lequel le seuil à l'intérieur duquel une correspondance entre la trame de diffusion et la trame de référence est considérée comme exister est adaptatif ou intelligent, qui apprend des niveaux de certitude qui peuvent être atteints lors de la comparaison ou de ce qui peut être considéré comme une bonne ou une mauvaise synchronisation d'une trame de diffusion avec une trame de référence donnée, où le degré de certitude requis tout au long de la diffusion peut être modifié en changeant le seuil requis.

6. Système configuré pour effectuer la synchronisation, selon le procédé selon l'une quelconque des revendications 1 à 5, et configuré en outre pour effectuer la distribution d'informations supplémentaires ou de données ou de métadonnées liées à une diffusion en direct vers une série de dispositifs (3), dans lequel il comprend :
• Une série de tuners de télévision (1), conçus pour synchroniser le contenu de l'émission télévisée des canaux de diffusion avec le contenu de référence enregistré ou stocké, en notifiant l'indicateur actuel et l'état de chacun des canaux synchronisés au moyen de requêtes HTTP, et distribuer les à tous les serveurs de synchronisation,
• Une série de serveurs de synchronisation (2) connectés aux groupes de tuners de télévision (1), qui concentrent les différents signaux de synchronisation reçus de leur part et redistribuent les mises à jour pertinentes vers les appareils (3) connectés à chaque canal, en les maintenant synchronisés en réel temps,
• une série de moniteurs de synchronisation (4) qui contrôlent l'exécution des serveurs de synchronisation (2), en stockant périodiquement leur état dans une table (5) et en le mettant à jour dans le cloud (6).
